# EUROPEAN PATENT SPECIFICATION

(11) **EP 3 874 377 B1**
(45) Date of publication and mention of the grant of the patent: **21.08.2024**
(21) Application number: 18811545.5
(22) Date of filing: 30.11.2018
(51) Int. Cl.: G06F 13/16

(54) **ELECTRONIC DEVICE FOR MEMORY ACCESS CONTROL AND METHOD OF OPERATING SAME**
ELEKTRONISCHE VORRICHTUNG ZUR SPEICHERZUGRIFFSSTEUERUNG UND BETRIEBSVERFAHREN DAFÜR
DISPOSITIF ÉLECTRONIQUE POUR UNE COMMANDE D'ACCÈS À UNE MÉMOIRE ET SON PROCÉDÉ DE FONCTIONNEMENT

(43) Date of publication of application: 08.09.2021
(73) Proprietor: Huawei Technologies Co., Ltd., Longgang District Shenzhen, Guangdong 518129 (CN)
(72) Inventor: BUSCH, Stephen, 80992 Munich (DE); SIXTA, Anthony, 80992 Munich (DE); LASSERRE, Serge, 80992 Munich (DE)
(74) Representative: Goddar, Heinz J.
(86) International application number: PCT/EP2018/083177
(87) International publication number: WO 2020/108778

(56) References cited:
- EP-A2- 1 018 687
- US-A- 6 006 303
- US-A1- 2006 088 049
- US-A1- 2016 342 540

## Description

### TECHNICAL FIELD

In general, the present disclosure relates to electronic devices. More specifically, the present disclosure relates to an electronic device having a shared memory, in particular a shared DRAM, as well as a method of operating such an electronic device.

### BACKGROUND

In an electronic device or system having several components sharing a memory, in particular a Dynamic Random Access Memory (DRAM), each component (herein also referred to as initiator) must have its DRAM access granted to achieve a given system performance. Generally, this is achieved through a conventional priority scheme that gives each of the initiators alternate access to the memory and guarantees an average memory access bandwidth to each initiator sufficient to fulfill an application being executed, such as an image processing application. However, such a conventional priority scheme may limit temporarily some initiators, when it is not really necessary, and, consequently, reduce the efficiency of the memory access. In other words, a guaranteed throughput with limiters on each initiator can be done at the expense of DRAM efficiency.

To mitigate the inefficiency of the memory access resulting from the conventional priority scheme, electronic devices with a shared memory are usually provided with buffers within the initiators that are bigger than required as well as with an additional throughput margin of the memory to compensate for the memory inefficiency.

In light of the above there is a need for an improved electronic device having different components sharing a memory allowing for a more efficient memory access.

EP 1 018 687 A2 discloses: An improved method and apparatus for connecting various function modules located within a computer or communications system are proposed. In accordance with the principles of the disclosure, a port manager controller (PMC) has a direct interface to each of the function modules and to a host component such as a system DRAM or a CPU. The PMC replaces both the local bus and the arbitrator of prior art systems. All the requests by function modules to access the host component are first processed by the PMC. The PMC schedules the incoming requests in accordance with predefined parameters, such as priority, efficiency, and/or timing. The PMC is capable of handling more than one request at a time. The PMC is also capable of dynamically adapting to load conditions and rearranging the incoming requests to efficiently utilize the available bandwidth. Thus, the PMC reduces latency and improves the performance of the computer or communications system. The PMC also eliminates the need for changes in bus architecture when new function modules are added or old function modules are removed and permits the reuse of old function modules. The PMC also reduces the need for internal buffers and thereby reduces manufacturing costs.

### SUMMARY

It is an object of the disclosure to provide an improved electronic device having different components sharing a memory allowing for a more efficient memory access.

The foregoing and other objects are achieved by the subject matter of the independent claims. Further implementation forms are apparent from the dependent claims, the description and the figures.

Generally, embodiments of the invention allow avoiding unnecessary limiting the memory access of an initiator, i.e. component of an electronic device, when there is no reason at system level. Hence, during periods of time when the shared memory is not heavily loaded, an initiator can generate more accesses than it needs to fulfil the application at hand and increase the memory efficiency by sending consecutive accesses (higher locality). Later, the same initiator(s) may be slowed down for a longer period of time. Thus, embodiments of the invention provide an electronic device, which is more resilient to memory congestion as it has been allowed to work faster before. Moreover, embodiments of the invention allow increasing the access locality for the memory because the same components of the electronic device have been allowed to access the memory for a longer time reducing the memory page switching.

More specifically, according to a first aspect, the invention relates to an electronic device comprising a shared Dynamic Random Access DRAM, configured to be accessed by at least one data processing circuit, wherein the DRAM is associated with an access load, and each of the at least one data processing circuit is configured to be allocated a data throughput, for example a nominal or pre-defined data throughput, for accessing the DRAM, and each of the at least one data processing circuit is configured to be controlled to adjust a data throughput on the basis of the access load of the DRAM and the respective data throughput, wherein the electronic device further comprises a communication bus configured to connect each data processing circuit with the DRAM, wherein each of the at least one data processing circuit includes a local controller configured to adjust the data throughput of a respective data processing circuit in response to receiving a controlling signal. As used herein, the data throughput of a data processing circuit is the allocated data throughput of the data processing circuit, which can be different from the actual data throughput of the data processing circuit.

Thus, an improved electronic device with a shared DRAM is provided allowing for a more efficient use of the shared DRAM.

In a further possible implementation form of the first aspect, the controlling signal comprises a determined data throughput for the respective data processing circuit, or a deduction or addition amount for the current data throughput of the respective data processing circuit.

Thus, an improved electronic device with a shared DRAM is provided allowing for a more efficient use of the shared DRAM.

In a further possible implementation form of the first aspect, the controlling signal includes a first controlling signal level and a second controlling signal level, wherein the first controlling signal level and the second controlling signal level correspond to a first data throughput and a second data throughput respectively, and wherein each local controller is configured to adjust the data throughput of the respective data processing circuit to the first data throughput when the controlling signal is at the first controlling signal level, and to the second data throughput when the controlling signal is at the second controlling signal level.

Thus, an improved electronic device with a shared DRAM is provided allowing for a more efficient adjustment of the data throughput of a respective data processing circuit to a specified data throughput.

In a further possible implementation form of the first aspect, the electronic device further comprises a bus-arbitrator configured to generate the controlling signal on the basis of at least one of the following: the access load of the DRAM, and information about the respective data processing circuits having a higher priority than the other data processing circuits.

Thus, a generated controlling signal can be based on one or more of the following parameters: the access load of the DRAM, and information about the respective data processing circuits having a higher priority than the other data processing circuits, and therefore the capacities of the electronic device is improved.

In a further possible implementation of the first aspect, the bus-arbitrator is configured to trigger the transmission of the controlling signal to the at least one data processing circuit, in case the access load of the DRAM is smaller than an access load threshold value.

In case the access load of the DRAM is smaller than an access load threshold value, the controlling signal may be triggered to the at least one data processing circuit, so the performance of the DRAM can be increased.

In a further possible implementation form of the first aspect, the electronic device further comprises a DRAM controller, in particular a DRAM controller, wherein the DRAM controller is configured to provide at least one of the following: information about the access load of the DRAM, and information about how much the data throughput is to be adjusted.

In a further possible implementation form of the first aspect, the bus-arbitrator can be configured to obtain information about a respective state, in particular load and/or processing state, of the other data processing circuits and to determine the data throughput for the data processing circuit, or a deduction or addition amount for the current data throughput of the data processing circuit on the basis of the information about a respective state, in particular load and/or processing state, of the other data processing circuits and the information about the access load of the DRAM provided, for instance, by the DRAM controller.

In a further possible implementation of the first aspect, the local controller of the respective data processing circuit is configured to determine the allocated data throughput (for example the nominal or pre-defined data throughput) for the respective data processing circuit.

In a further possible implementation of the first aspect, the local controller is further configured, in case the data throughput is larger than the allocated data throughput (for example a nominal or pre-defined data throughput), to adjust the data throughput to an adjusted data throughput smaller than the data throughput.

Thus, an improved electronic device with a shared DRAM is provided allowing for a more efficient use of the shared DRAM.

In a further possible implementation form of the first aspect, the at least one data processing circuit comprises two data processing circuits, each of the two data processing circuits is configured to simultaneously adjust on the basis of the access load of the DRAM to an adjusted data throughput smaller than the data throughput of the respective data processing circuit. In other words, each of the data processing circuits can adjust their respective data throughput based on its respective data throughput for example a nominal or pre-defined data throughput, but may be controlled by the same controlling signal.

In a further possible implementation form of the first aspect, the at least one data processing circuit comprise an image signal processing, ISP, circuit.

In a further possible implementation form of the first aspect, the DRAM is a Dynamic Random Access DRAM, DRAM.

In a further possible implementation form of the first aspect, the electronic device is a system on a chip, SoC.

According to a second aspect, the invention relates to a method of accessing a DRAM by at least one data processing circuit, the DRAM being associated with an access load, wherein each of the at least one data processing circuits is allocated a data throughput, for example a nominal or pre-defined data throughput for accessing the DRAM, wherein the method comprises the step of: adjusting a data throughput of the at least one data processing circuit on the basis of the access load of the DRAM and the respective data throughput (for example the nominal or pre-defined data throughput), wherein the method further comprises connecting, by a communication bus, each data processing circuit with the DRAM, wherein each of the at least one data processing circuit includes a local controller which adjusts the data throughput of a respective data processing circuit in response to receiving a controlling signal.

The method according to the second aspect of the invention can be performed by the electronic device according to the first aspect of the invention. Further features of the method according to the second aspect of the invention result directly from the functionality of the electronic device according to the first aspect of the invention and its different implementation forms described above and below.

Embodiments of the invention can be implemented in hardware, in software or in a combination of hardware and software.

Details of one or more embodiments are set forth in the accompanying drawings and the description below. Other features, objects, and advantages will be apparent from the description, drawings, and claims.

### BRIEF DESCRIPTION OF THE DRAWINGS

In the following embodiments of the invention are described in more detail with reference to the attached figures and drawings, in which:
Fig. 1 is a schematic diagram showing an electronic device with a shared memory according to an embodiment of the invention;
Fig. 2 is a schematic diagram showing an electronic device with a shared memory according to an embodiment of the invention;
Figs. 3a and 3b are schematic diagrams showing a more detailed view of a local controller of the electronic device of figures 1 and 2 according to an embodiment of the invention;
Fig. 4 is a schematic diagram illustrating different aspects of the invention;
Fig. 5 is a schematic diagram illustrating different aspects of the invention;
Fig. 6 is a schematic diagram illustrating different aspects of the invention;
Fig. 7 is a schematic diagram illustrating different aspects of the invention;
Fig. 8 is a schematic diagram illustrating different aspects of the invention; and
Fig. 9 is a diagram illustrating a method of operating an electronic device according to an embodiment.

In the following identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

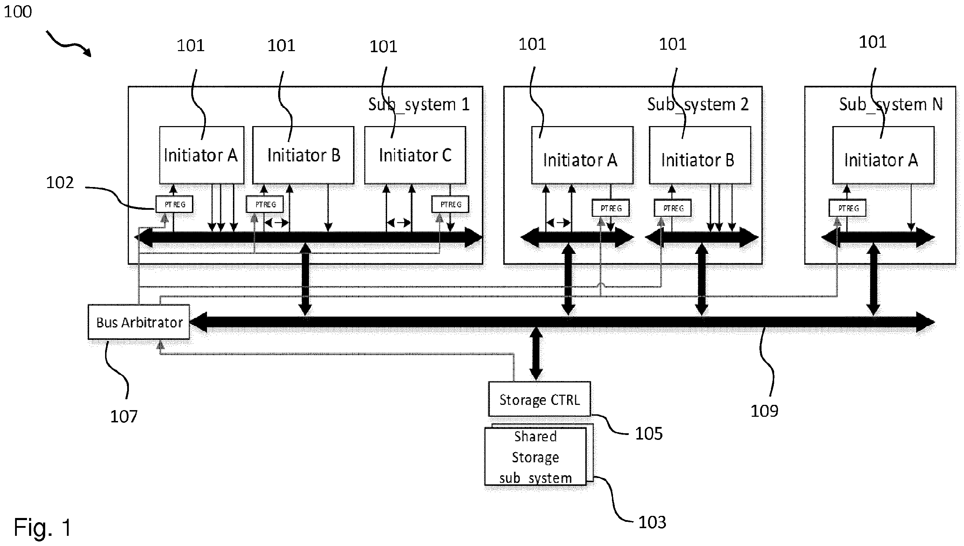

Figure 1 is a schematic diagram showing an electronic device 100 with a shared storage sub-system (DRAM 103). The electronic device 100 further comprises one or more initiators (e.g. data processing circuits 101, which are configured to access the shared storage sub-system (e.g. memory) 103, i.e. to read data from and/or write data to the shared storage sub-system (e.g. memory) 103. In the exemplary embodiment of the electronic device 100 shown in figure 1, the electronic device 100 comprises six data processing circuits 101 (referred to as "initiators" in figure 1) being configured to access the shared storage sub-system (e.g. memory) 103, wherein some of the six data processing circuits 101 can defined sub-systems of the electronic device 100 (e.g., initiator A, initiator B, and initiator C define a sub_system 1). By way of example, the electronic device 100 could be, for instance, a mobile phone or a component thereof, wherein one of the data processing circuits 101 is for example, an image signal processing, ISP, circuit 101 associated with a camera and/or a display of the ISP circuit 101. In an embodiment, the electronic device 100 is a system on a chip, SoC.

Because the shared storage sub-system (e.g. memory) 103 of the electronic device 100 is being accessed by the initiators (e.g. one or more data processing circuits) 101, the shared memory 103 may be associated with an access load. As will be described in more detail further below, each of the initiators (e.g. one or more data processing circuits) 101 is allocated a data throughput (for example a nominal or pre-defined data throughput) for accessing the shared storage sub-system (e.g. memory) 103 and configured to be controlled to adjust a current data throughput on the basis of the access load of the shared storage sub-system (e.g. memory) 103 and the data throughput (for example the nominal or pre-defined data throughput) of the respective initiator (e.g. data processing circuit) 101. As used herein, the data throughput (e.g., the nominal or pre-defined data throughput) of a respective initiator (e.g. data processing circuit) 101 is the allocated data throughput of the initiator (e.g. data processing circuit) 101, which can be different from the actual current data throughput of the initiator (e.g. data processing circuit) 101.

To this end, each of the initiators (e.g. one or more data processing circuits) 101 of the electronic device 100 comprises a local controller 102 configured to adjust the data throughput of the respective initiator (e.g. data processing circuit) 101 in response to receiving a controlling signal. For the sake of clarity, in figure 1 the local controller 102 (for example, referred to as PTREG - Pipe Throughput Regulator) of one of the six data processing circuits 101 has been identified by the reference sign 102. As illustrated by the arrows in figure 1, each of the local controllers 102 is configured to communicate with a communication bus 109 and in particular a bus arbitrator 107 of the electronic device 100. The communication bus 109 is configured to connect each initiator (e.g. data processing circuit) 101 with the memory 103. In an embodiment, the bus arbitrator 107 is configured to control the use of the communication bus 109 on the basis of a bus arbitration scheme.

As illustrated in figure 1, each local controller (e.g., the PTREG) 102 is configured to receive, for instance from the bus arbitrator 107, a controlling signal, e.g. a slowdown signal or a speed-up signal, including information about the status of the system, for instance the load of the shared storage sub-system (e.g. memory, in particular DRAM) 103. In addition, the information may also include the amount of slowdown or speed-up of the current actual data throughput of the data processing circuit associated with the respective local controller 102. The amount of slowdown or speed-up may be determined based, for instance, on the access load of the storage sub-system (e.g. memory) 103 and/or priority of the initiators (e.g. data processing circuits) 101 of the electronic device 100.

Thus, in an embodiment, the controlling signal may comprise a determined data throughput for the respective initiator (e.g. data processing circuit) 101, or a deduction or addition amount for the current data throughput of the respective initiator (e.g. data processing circuit) 101.

In an embodiment, the electronic device 100 further comprises a storage sub-system (e.g. memory) controller 105, wherein the storage sub-system (e.g. memory) controller 105 is configured to provide information about the access load of the shared storage sub-system (e.g. memory) 103 and/or information about how much the data throughput of a respective initiator (e.g. data processing circuit) 101 is to be adjusted.

In a further embodiment, the bus arbitrator 107 can be configured to obtain information about a respective state, in particular load and/or processing state, of the other data processing circuits. The bus arbitrator 108 can be further configured to determine the data throughput for the initiator (e.g. data processing circuit) 101, or a deduction or addition amount for the current data throughput of the initiator (e.g. data processing circuit) 101. The data throughput for the initiator 101 or a deduction or addition amount for the current data throughput of the initiator 101 is determined on the basis of the information about a respective state (e.g., load and/or processing state) of the other data processing circuits and the information about the access load of the storage sub-system (e.g. memory) 103 provided. The information about the access load of the storage sub-system 103 is determined, for instance, by the storage sub-system (e.g. memory) controller 105.

Thus, in such an embodiment, the bus arbitrator 107 distributes the controlling signal to the initiators (e.g. data processing circuits) 101 and determines a level of adjustment (e.g. level 1 for the data processing circuit A of sub-system 2 and level 2 for the data processing circuit B of sub-system 2). In other words, if the storage sub-system (e.g. memory) controller 105 by means of the controlling signal provides several levels of slowdown based on some kinds of thresholds in its pending access queue, then it can still be the role of the bus arbitrator 107 to send to each of the initiators (e.g. data processing circuits) 101 the level defined by the controlling signal. The level defined by the controlling signal is appropriate for the tasks because the tasks can obtain the global system state, e.g. with respect to criticality and/or real time constraints.

In an embodiment, the bus arbitrator 107 can be configured to trigger the transmission of the controlling signal to one or more initiators (e.g. data processing circuits) 101, in case the access load of the storage sub-system (e.g. memory) 103 is smaller than an access load threshold value. By triggering the transmission of the controlling signal to one or more initiators, the one or more initiators may adjust their data throughput. So the performance of the storage sub-system 103 can be increased.

In the disclosure, the term "storage sub-system" can be interpreted to mean storage circuitries in the electronic device, for example, a memory, or a disk (e.g. a hard drive, or a Solid-state drive), etc. Hereinafter, a memory (DRAM) is described as an example for the storage sub-system.

In this disclosure, the term "initiator" can be interpreted to mean a component (e.g. a data processing circuit) of an electronic device which initiate memory access, e.g. a network interface controller (NIC) driver, or an image signal processing (ISP) circuit etc. Hereinafter, a data processing circuit is described as an example for the initiator.

The control signal could indicate, for instance, that the memory 103 is already heavily loaded. According to embodiments of the invention, if the memory 103 is not heavily loaded, the data throughput of the respective data processing circuit 101 is not unnecessarily limited.

If it is detected that the memory 103 is already heavily loaded, the control signal is triggered for slowing down the data throughput of one or more of the data processing circuits 101. In response to receiving the respective control signal, the local controller 102 of the respective data processing circuit 101 reduces the data throughput until, for instance, the pre-allocated data throughput is reached.

According to embodiments of the invention, if the data throughput of a respective data processing circuit 101 is below its allocated data throughput (for example a nominal or pre-defined data throughput), then the respective data processing circuit 101 may continue to send memory access requests, until the allocated data throughput (for example the nominal or pre-defined data throughput) is reached.

Thus, according to embodiments of the invention, when there is no memory access issue, e.g. the memory access load is smaller than an access load threshold value, the local controller 102 may allow a larger data throughput than the data throughput (for example the nominal or pre-defined data throughput). In the other case, e.g. when there is a memory access issue in that, for instance, the memory access load is not smaller than the access load threshold value, the rate of the memory access requests can be reduced, until, for instance, the respective data throughput allocated to the respective data processing circuit 101 is reached.

In an embodiment, the local controller 102 of the respective data processing circuit 101 may be configured to determine the allocated data throughput (for example the nominal or pre-defined data throughput) for the respective data processing circuit 101.

In an embodiment, the controlling signal may define at least three controlling signal levels, including a first controlling signal level and a second controlling signal level, wherein the first controlling signal level and the second controlling signal level correspond to a first data throughput and a second data throughput respectively. A local controller 102 may be configured to adjust the data throughput of the respective data processing circuit 101 to the first data throughput when the controlling signal is at the first controlling signal level, and the local controller 102 may be further configured to adjust the data throughput of the respective data processing circuit 101 to the second data throughput when the controlling signal is at the second controlling signal level.

The electronic device 100 shown in figure 1 is an example for a possible implementation form of the embodiment of the invention. Generally, the electronic device 100 may comprise multiple initiators, e.g. data processing circuits 101, sharing a global memory 103 with different memory access requirements such as high throughput, low throughput, real time access, non-real time access and the like. As already described above, the sub-systems, including one or more data processing circuits 101, may access the shared memory 103 through one or more levels of bus arbitration. As already described above, a data processing circuit 101 shall slow down the data throughput. The slow down operation can be dynamically defined at system level based on various constraints, such as system memory congestions, specific properties of the different data processing circuits 101 as well as urgency for the respective data processing circuit to access the shared memory 103 and the information can be returned to each data processing circuit 101 to adjust its data throughput accordingly.

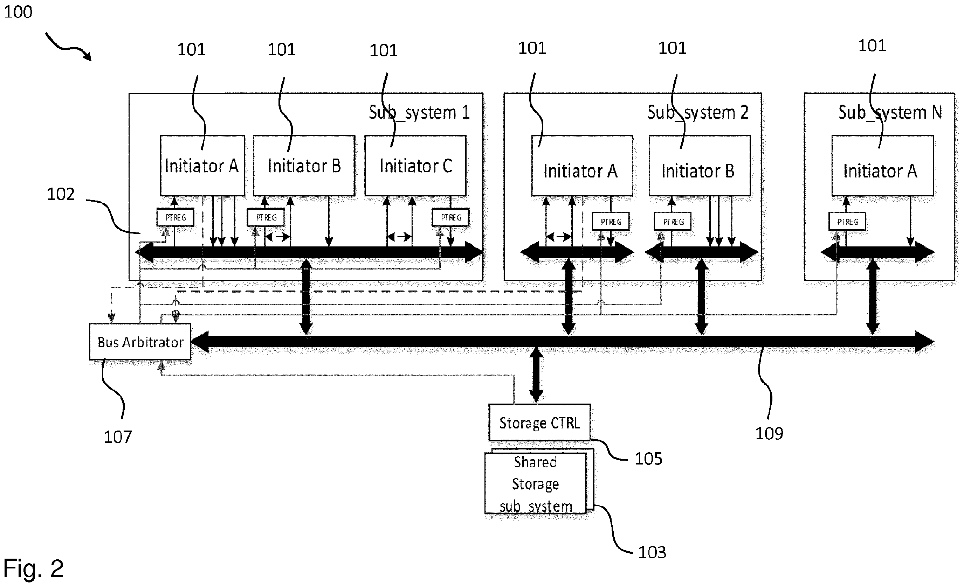

Figure 2 shows a further embodiment of the electronic device 100 of figure 1, wherein a data processing circuit A 101 of a first sub-system of the electronic device 101 and a data processing circuit A 101 of a second sub-system of the electronic device 100 communicate with the bus arbitrator 107 for accessing the shared memory 103.

In the embodiment of the electronic device 100 shown in figures 1 and 2, a sub-system of the electronic device 100 comprises at least a first data processing circuit 101 and a second data processing circuit 101, such as the sub-system 1 or the sub-system 2 of figures 1 and 2. The first data processing circuit 101 and a second data processing circuit 101 may be configured to simultaneously adjust on the basis of the access load of the shared memory 103. Specifically, the current data throughput of the first data processing unit 101 may be adjusted to an adjusted data throughput smaller than the current data throughput of the first data processing unit 101 and the data throughput of the second data processing unit 101 may be adjusted to an adjusted data throughput smaller than the current data throughput of the second data processing unit 101. In other words, the first data processing unit 101 and the second data processing unit 101 may be configured to adjust on the basis of the access load of the memory 103 to an adjusted data throughput smaller than the data throughput of the respective data processing circuit 101.

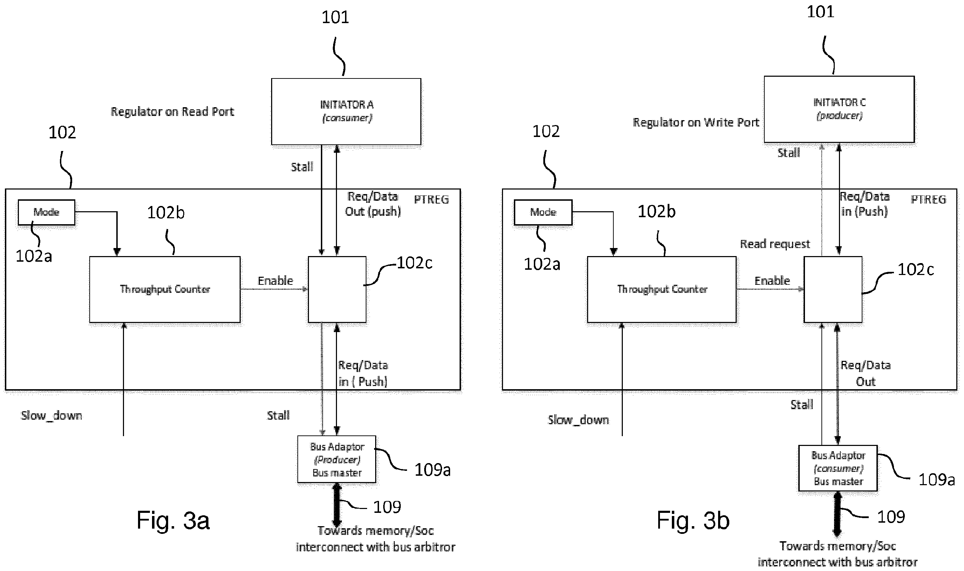

Figures 3a and 3b are schematic diagrams showing a more detailed view of the local controller 102 of a data processing circuit 101 in the electronic device 100 illustrated in figures 1 and 2 according to an embodiment of the invention. In figure 3a the local processor 102 controls the data throughput of a data processing circuit 101 reading data (i.e. "data consumer") from the shared memory 103, while in figure 3b the local processor 102 controls the data throughput of a data processing circuit 101 writing data (i.e. "data producer") to the shared memory 103. In both cases, the local controller 102 is located between the respective data processing unit 101 and a bus adaptor 109a that can be configured to generate the requests to the shared memory 103.

In the embodiment shown in figure 3a, the bus adaptor 109a is configured to generate the read request to the shared memory 103 and pushed data towards the data processing circuit 101 A, i.e. the consumer. The local controller 102, which comprises a throughput counter 102b, can manage the stall that lets the data pushed by the bus adaptor 109a go to the data processing circuit 101 or not.

If in a first mode, as provided by a mode indicator 102a, the slowdown signal is active and the throughput counter 102b indicates a value higher than the data throughput (for example the nominal or pre-defined data throughput), then a limiting logic 102c, such as access per cycle counter can be enabled again and the stall signal (shown as an arrow is figure 3a) is forced appropriately, blocking new data one every other cycle to be sent to the data processing circuit 101. As a consequence, this can be limiting the bus adaptor 109a to send a new read request to the memory 103. Once the throughput counter goes below the average throughput value, then the enable is set to 1 again and the stall (regulation) signal is deactivated. Data can be forwarded again to the data processing circuit 101 with a maximum throughput and the bus adaptor 109a can start making new requests to the memory 103.

In a second mode indicated by the mode indicator 102a, the throughput counter 102b can simply set the enable signal to zero, which forces the stall to follow an average throughput.

In the embodiment shown in figure 3b, the data processing circuit 101 sends data to the bus adaptor 109a, which causes the bus adaptor 109a to send one or more write requests to the memory 103. Similar to the embodiment shown in figure 3a, the throughput counter 102b can indicates, whether the data processing circuit 101 is above or below the data throughput (for example a nominal or pre-defined data throughput).

In the second mode, when the slowdown signal is active and the throughput counter 102b indicates a value higher than the data throughput (for example the nominal or pre-defined data throughput), then the enable signal can be set to zero and a stall is sent to the data processing circuit ("producer") 101. In the first mode, the throughput counter 102b may simply set the enable signal to zero, which forces the stall when the data throughput value (for example the nominal or pre-defined data throughput) is reached to be send to the data processing circuit 101 (standard limiter behavior).

According to embodiments of the invention, each data processing circuit 101 may be made of consecutive processing modules that process data as a stream. Depending on the number of read and write ports of a data processing circuit 101, it is more advantageous to put the local controller 102 on the write port of the respective data processing circuit 101 or on a read port thereof. For instance, in the exemplary embodiment shown in figures 1 and 2, the data processing circuit A of the sub-system 1 has the local controller 102 on its single read port, while the data processing circuit B of the same sub-system 1 has the local controller 102 on its write port.

In the case of the local controller 102 being connected on the write port, as illustrated in figure 3b, the local controller 102 can adjust a stall based on the throughput value and slowdown signal. This stall can be combined with the stall sent by a bus controller and then transmitted to the data processing circuit 101.

In the case of the local controller 102 being connected on the read port, as illustrated in figure 3a, in a similar way the local controller 102 can adjust a stall based on the throughput value and the slowdown signal. The stall may be combined with the stall that comes from the data processing circuit 101 (data consumer in that case) to prevent new data to be sent to the data processing circuit 101. In that case, the data may be maintained in the bus controller (e.g. a first In, first Out (FIFO) buffer). The bus controller can be the one that generates the read request on the memory bus 109 but it should only generate read requests if its (generally small) FIFO is not full. Hence the stall coming from the local controller 102 can control the throughput of the read of the bus controller.

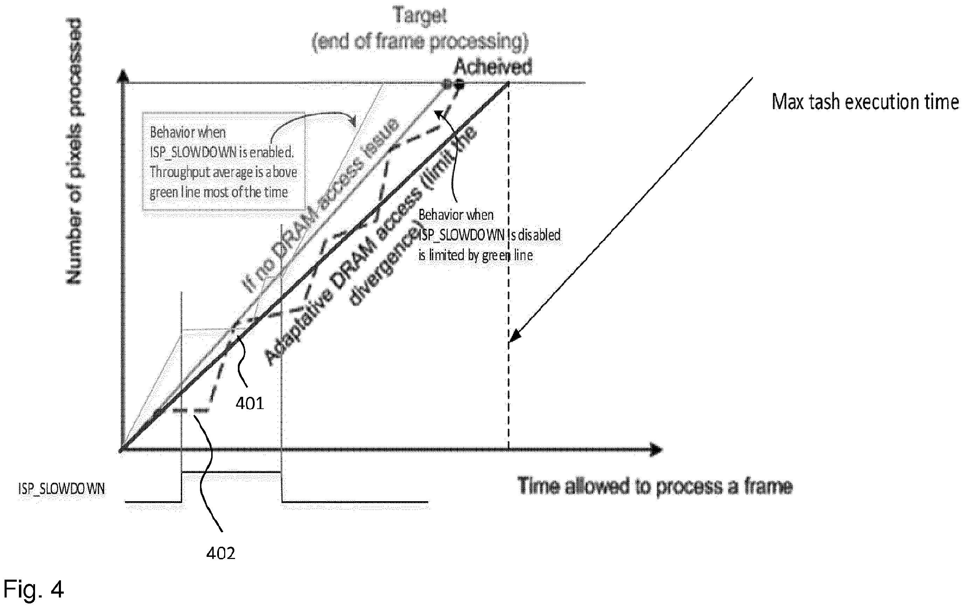

For the exemplary case of the data processing circuit 101 being implemented as a ISP circuit 101. Figures 4 to 8 show different graphs of the number of pixels processed as a function of the processing time for illustrating different aspects of the invention, in particular the adjustment of a current data throughput to an adjusted data throughput, as implemented by embodiments of the invention.

More specifically, figure 4 illustrates a graph of the expected traffic throughput monitoring and adjustment. As already described above, memory to memory processing can be controlled using the local controllers 102 as processing modules connected to the memory 103. The behavior can be based on a processing time target such that an average throughput is requested (solid line 401 in figure 4), but can also be further controlled by the slowdown signal, in case DRAM controller 105 has too many requests to handle. In any case, the local controller 102 can ensure that the processing time target is met whatever the top level slow down behavior.

As already described above, in case the slowdown is not enabled, the local controller 102 behaves as follows. The programmable data throughput (for example the nominal or pre-defined data throughput) illustrated by the solid line 401 in figure 4 can be guaranteed and the system maintained around that line (dashed line 402). This implies that the local controller 102 generates the appropriate stall "back pressure" signal based on a programmed target throughput, e.g. the nominal data throughput or pre-defined data throughput.

In case the slowdown function is enabled, then the data processing circuit 101 can be allowed to go as fast as it can when slowdown is not asserted. The local controller 102 can run faster than requested by the target, but will stall the processing when slowdown is asserted. As soon as the processing time target is not met anymore, the local controller 102 will not stall and will generate traffic to secure the target until the slowdown is de-asserted.

For instance, if the frame rate is 30 frames per second for a 2M pixel image, assuming the pipeline clock is 300 MHz, the pipeline needs to process one pixel every ~3 cycles (300000000/(1920x1088x30x1.2) = 4.45) assuming a 20 % margin. If the slowdown is not enabled, the local controller is going to accept new data only one cycle every ~3 cycles. If the slowdown is enabled, the local controller 102 will try to go as fast as possible, but will stall the processing if the slowdown signal is asserted, until the processing time target is not met.

Figures 4 to 8 illustrate this average processing by describing possible ways of controlling memory access to adapt the data throughput to a current status of the electronic device 100. Clearly, all the behaviors described in figures 4 to 8 illustrate different situations which can occur during usage of the electronic device 100. The embodiments of the invention are not limited to the particular behaviors of figures 4 to 8 and different behaviors not shown in this disclosure or combinations of any of the behaviors described in figures 1 to 8 belong to the scope of this disclosure. If the memory 103 supplies data faster than the required processing throughput, the local controller 103 will stall based on the slowdown and the processing time target. If the memory 103 did not manage to supply the data fast enough, the local controller 102 will recover later as soon as the memory bandwidth allows a higher data throughput.

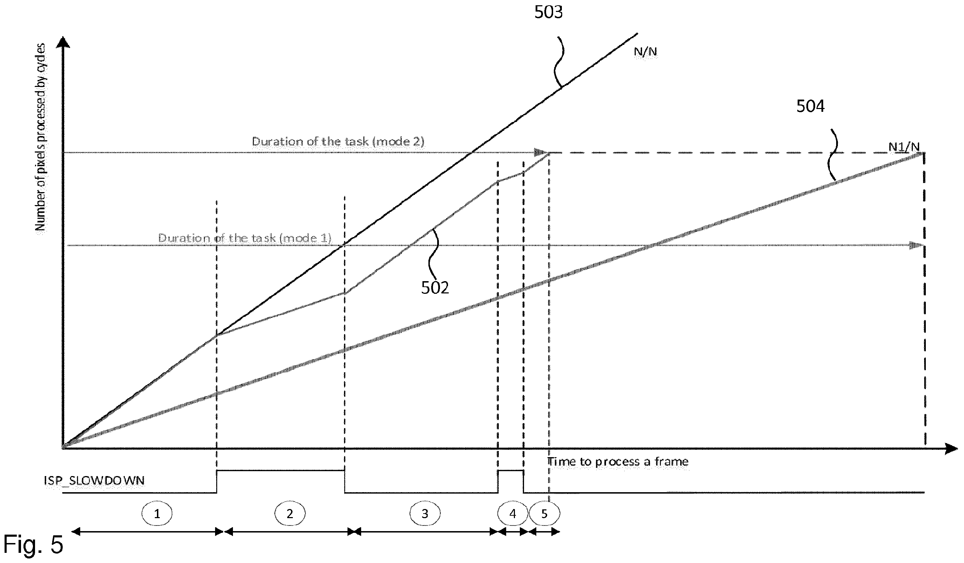

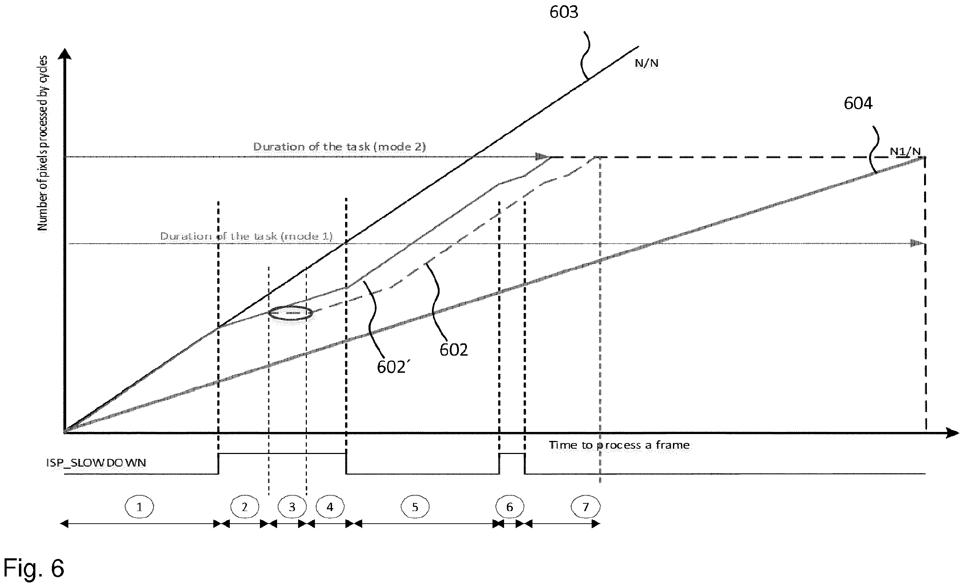

Figures 5 and 6 illustrate that according to embodiments of the invention during slowdown the one or more data processing circuits 101 do not stop accessing the memory, but follow for example, a nominal or average data throughput. As will be appreciated, advantageously this allows the processing task to be completed faster. Thus, the memory access efficiency is improved by allowing in comparison to the state of the art more access from a given data processing circuit 101 during those time periods, when the memory 103 is less loaded.

By way of example, in figure 5 the data processing circuit 101 is accessing the memory 103 faster than a first pre-defined data throughput (for example the nominal data throughput) indicated by line 504 during a first, third and fifth period (indicated in the figure by corresponding numbers ①, ③, ⑤), whereas during a second and fourth period (indicated by ②, and ④) the data throughput is reduced to or below the first pre-defined data throughput, as illustrated by line 502 in figure 5. The access speed of the memory is indicated by the slope of line 502. In alternative implementations the data throughput may be in some periods also below the predefined data throughput. Line 503 of figure 5 illustrates a maximal data throughput that the data processing circuit 101 can handle, i.e. one datum every cycle (N/N). The maximal data throughput may define a second pre-defined data throughput. Line 504 of figure 5, indicating the first pre-defined data throughput, defines a first possible level of regulation, which may be the second largest data throughput of the data processing circuit 101 after the maximal data throughput, namely N-1 data for N cycles (N1/N) with N, for instance, equal to 16.

By way of example, in figure 6 , as illustrated by line 602, the data processing circuit 101 is accessing the memory 103 faster than a first pre-defined data throughput during a first, fifth and seventh period (indicated in the figure by the same notation used for figure 5), whereas during a second, fourth and sixth period the data throughput is reduced to the pre-defined or nominal data throughput and during a third period the data throughput goes even below the nominal one because the system shared memory 103 just does respond to the access of the data processing circuit 101, because it is busy servicing the other data processing circuits. This behavior (shown by the dashed line 602) diverges from the ideal behavior (shown by the solid line 602'). Line 603 of figure 6 illustrates the maximal data throughput that the data processing circuit 101 can handle, i.e. one datum every cycle (N/N). The maximal data throughput may define a second pre-defined data throughput. Line 604 of figure 6, indicating the first pre-defined data throughput, defines a first possible level of regulation, which may be the second largest data throughput of the data processing circuit 101 after the maximal data throughput, namely N-1 data for N cycles (N1/N) with N, for instance, equal to 16.

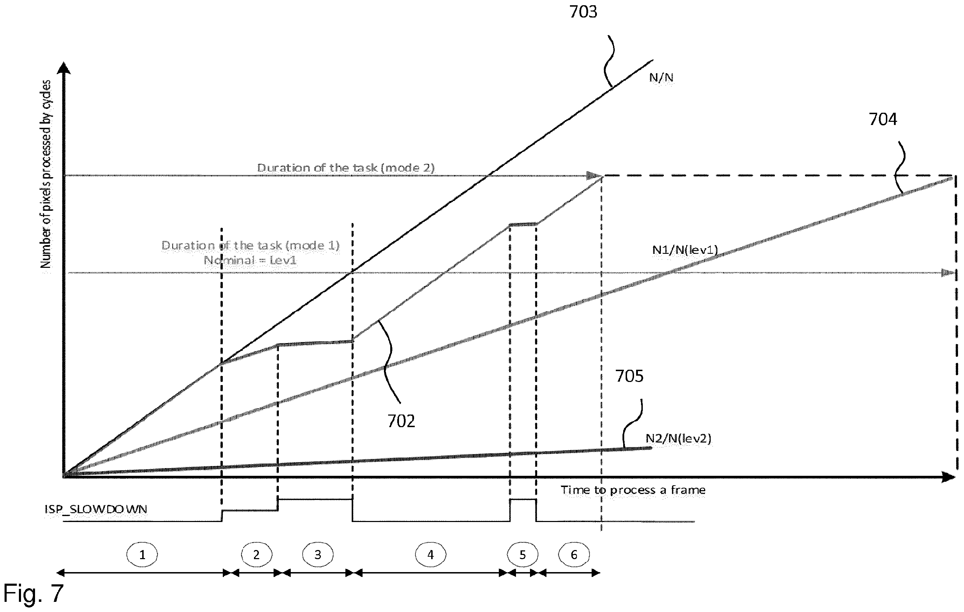

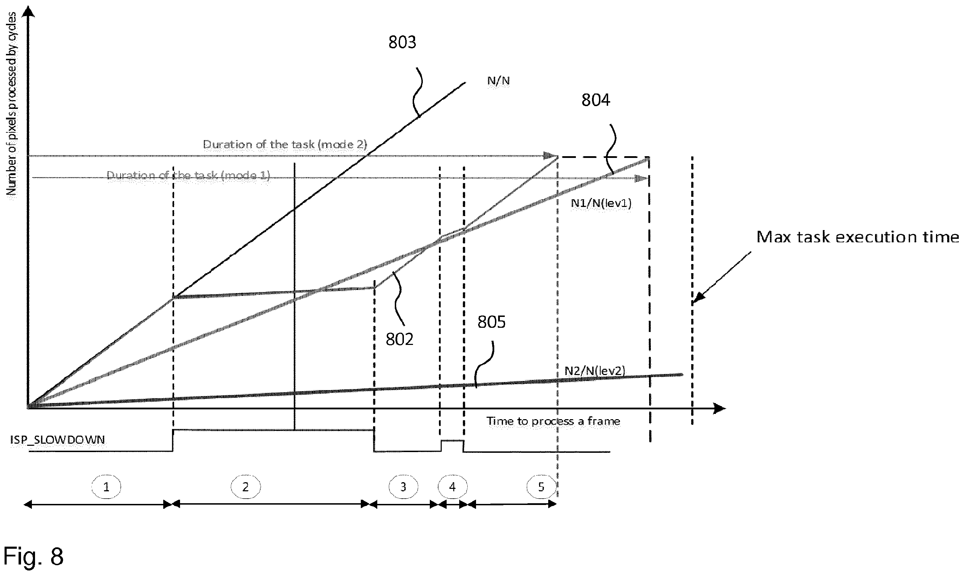

Figures 7 and 8 illustrate two examples of the effects of a multi-level control signal, as implemented by embodiments of the invention. Such a multi-level control signal allows controlling the execution of a processing task with a finer granularity as well as reducing the data throughput to a level below the allocated data throughput (for example the nominal data throughput), such as to a level of 50% of the allocated nominal data throughput.

By way of example, in figure 7, as illustrated by line 702, the data processing circuit 101 is accessing the memory 103 faster than a first pre-defined data throughput during a first, fourth and sixth period (indicated in the figure by the same notation used for figure 5), whereas during the second period the data throughput is reduced to the first pre-defined or nominal data throughput and during the third and fifth period the data throughput is further reduced to a second pre-defined or nominal level of data throughput as defined by the multi-level controlling signal. Line 703 of figure 7 illustrates the maximal data throughput that the data processing circuit 101 can handle, i.e. one datum every cycle (N/N). The maximal data throughput may define a second pre-defined data throughput. Line 704 of figure 7, indicating the first pre-defined data throughput, defines a the first possible level of regulation, which may be the second largest data throughput of the data processing circuit 101 after the maximal data throughput, namely N-1 data for N cycles (N1/N) with N, for instance, equal to 16. Line 705 of figure 7 illustrates a second possible level of regulation, which may be the third largest data throughput of the data processing circuit 101 after the maximal data throughput 703, namely N-2 data for N cycles (N2/N).

The behavior shown in figure 8 can be explained along the same line of the explanations of figures 5 to 7. As for figure 7, figure 8 shows a maximal data throughput line 803 and two further possible levels of regulations shown by lines 804 and 805. Lines 804 and 805 may have the same slope of lines 704 and 705 of figure 7. The plot of figure 8 shows a possible control of the behavior of the memory access. As illustrated by line 802, the data processing circuit 101 is accessing the memory 103 faster than a first pre-defined or nominal data throughput during a first, third and fifth period, whereas during the second period the data throughput is reduced to the second pre-defined level of data throughput) and during the fourth period the data throughput is less reduced to a first pre-defined or nominal level of data throughput. In this case, the second period is long enough that the data processing circuit 101 drops below the first pre-defined data throughput (line 804), which is required to accomplish the task processing on time. Line 803 of figure 8 illustrates the maximal data throughput that the data processing circuit 101 can handle, i.e. one datum every cycle (N/N). The maximal data throughput may define a second pre-defined data throughput. Line 804 of figure 8, indicating the first pre-defined data throughput, defines a the first possible level of regulation, which may be the second largest data throughput of the data processing circuit 101 after the maximal data throughput 703, namely N-1 data for N cycles (N1/N) with N, for instance, equal to 16. Line 805 of figure 8, indicating the second pre-defined data throughput, the second possible level of regulation, which may be the third largest data throughput of the data processing circuit 101 after the maximal data throughput 703, namely N-2 data for N cycles (N2/N).

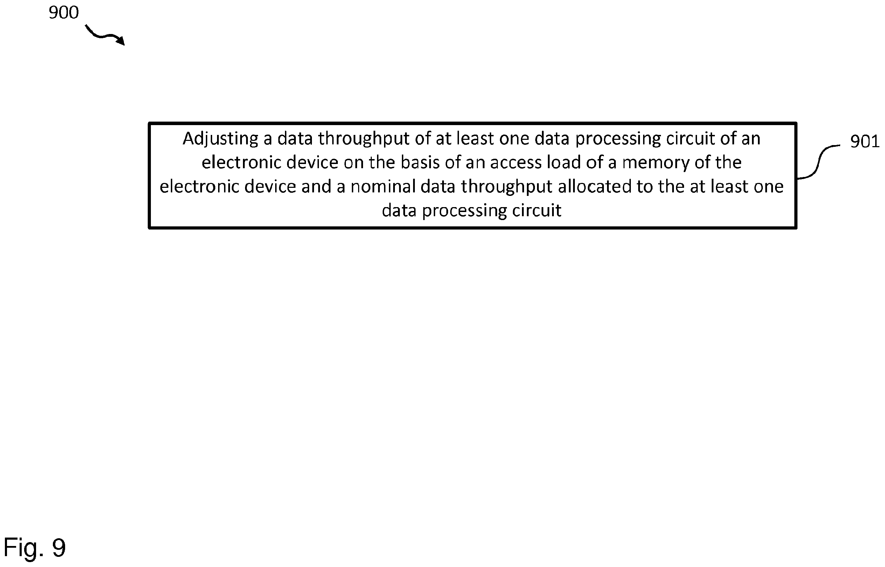

Figure 9 is a diagram illustrating a corresponding method 900 of operating the electronic device 100 according to an embodiment. The method 900 comprises the step of adjusting the current data throughput of the one or more data processing circuits 101 on the basis of the access load of the memory 103 and the respective data throughput (for example the nominal or pre-defined data throughput) of the one or more data processing circuits 101.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

## Claims

1. An electronic device (100) comprising:
a shared Dynamic Random Access Memory, DRAM (103) configured to be accessed by at least one data processing circuit (101), wherein the DRAM (103) is associated with an access load; and
wherein each of the at least one data processing circuit (101) is configured to be allocated a data throughput for accessing the DRAM (103) and configured to be controlled to adjust a data throughput on the basis of the access load of the DRAM (103) and the respective data throughput,
wherein the electronic device (100) further comprises a communication bus (109) configured to connect each data processing circuit (101) with the DRAM (103),
wherein each of the at least one data processing circuit (101) comprises a local controller (102) configured to adjust the data throughput of a respective data processing circuit (101) in response to receiving a controlling signal.

2. The electronic device (100) of claim 1, wherein the controlling signal comprises a determined data throughput for the respective data processing circuit (101), or a deduction or addition amount for the current data throughput of the respective data processing circuit (101).

3. The electronic device (100) of claim 1 or 2, wherein the controlling signal includes a first controlling signal level and a second controlling signal level, wherein the first controlling signal level and the second controlling signal level correspond to a first data throughput and a second data throughput respectively, and
each local controller (102) is further configured to adjust the data throughput of the respective data processing circuit (101) to the first data throughput when the controlling signal is at the first controlling signal level, and is further configured to adjust the data throughput of the respective data processing circuit (101) to the second data throughput when the controlling signal is at the second controlling signal level.

4. The electronic device (100) of any one of claims 1 to 3, wherein the electronic device (100) further comprises a bus-arbitrator (107) configured to generate the controlling signal on the basis of at least one of the following:
the access load of the DRAM (103), and information about the respective data processing circuits (101) having a higher priority than the other data processing circuits (101).

5. The electronic device (100) of claim 4, wherein the bus-arbitrator (107) is configured to trigger the transmission of the controlling signal to the at least one data processing circuit (101), in case the access load of the DRAM (103) is smaller than an access load threshold value.

6. The electronic device (100) of any one of the preceding claims, wherein the electronic device further comprises a DRAM controller (105), wherein the DRAM controller (105) is configured to provide at least one of the following:
information about the access load of the DRAM (103), and
information about how much the data throughput is to be adjusted.

7. The electronic device (100) of any one of the claims 1 to 6, wherein the local controller (102) of the respective data processing circuit (101) is configured to determine the allocated data throughput for the respective data processing circuit (101).

8. The electronic device (100) of any one of the claims 1 to 7, wherein the local controller (102) is further configured, in case the data throughput is larger than the allocated data throughput, to adjust the data throughput to an adjusted data throughput smaller than the data throughput.

9. The electronic device (100) of any one of the claims 1 to 7, wherein the local controller (102) is configured, in case the data throughput is larger than the allocated data throughput, to adjust the data throughput to an adjusted data throughput smaller than the data throughput on the basis of the access load of the DRAM (103) and one or more states of the other data processing circuits (101), wherein the one or more states of the other data processing circuits (101) comprise a data throughput state, a load state and/or a processing state.

10. The electronic device (100) of any one of the preceding claims, wherein the at least one data processing circuit (101) comprises two data processing circuits (101), each of the two data processing circuits (101) is configured to adjust on the basis of the access load of the DRAM (103) to an adjusted data throughput smaller than the data throughput of the respective data processing circuit (101).

11. The electronic device (100) of any one of the preceding claims, wherein the at least one data processing circuit (101) comprise an image signal processing, ISP, circuit (101).

12. The electronic device (100) of any one of the preceding claims, wherein the electronic device (100) is a system on a chip, SoC.

13. A method (900) of accessing a DRAM (103) by at least one data processing circuit (101), the DRAM (103) being associated with an access load, wherein each of the at least one data processing circuit (101) is allocated a data throughput for accessing the DRAM (103), wherein the method (900) comprises:
adjusting (901) a data throughput of the at least one data processing circuit (101) on the basis of the access load of the DRAM (103) and the respective data throughput,
wherein the method further comprises connecting, by a communication bus (109), each data processing circuit (101) with the DRAM (103) wherein each of the at least one data processing circuit (101) comprises a local controller (102) which adjusts the data throughput of a respective data processing circuit (101) in response to receiving a controlling signal.

## Patentansprüche

1. Elektronische Vorrichtung (100), umfassend:
einen gemeinsam genutzten dynamischen Direktzugriffsspeicher, DRAM, (103), der dazu konfiguriert ist, dass mindestens eine Datenverarbeitungsschaltung (101) darauf zugreift, wobei der DRAM (103) mit einer Zugriffslast verknüpft ist; und
wobei jede der mindestens einen Datenverarbeitungsschaltungen (101) dazu konfiguriert ist, dass ihr ein Datendurchsatz für das Zugreifen auf den DRAM (103) zugewiesen wird, und dazu konfiguriert ist, gesteuert zu werden, um einen Datendurchsatz auf der Grundlage der Zugriffslast des DRAM (103) und des jeweiligen Datendurchsatzes anzupassen,
wobei die elektronische Vorrichtung (100) ferner einen Kommunikationsbus (109) umfasst, der dazu konfiguriert ist, jede Datenverarbeitungsschaltung (101) mit dem DRAM (103) zu verbinden,
wobei jede der mindestens einen Datenverarbeitungsschaltungen (101) eine lokale Steuerung (102) umfasst, die dazu konfiguriert ist, den Datendurchsatz einer jeweiligen Datenverarbeitungsschaltung (101) als Reaktion auf das Empfangen eines Steuersignals anzupassen.

2. Elektronische Vorrichtung (100) nach Anspruch 1, wobei das Steuersignal einen bestimmten Datendurchsatz für die jeweilige Datenverarbeitungsschaltung (101) oder einen Abzugs- oder Additionsbetrag für den aktuellen Datendurchsatz der jeweiligen Datenverarbeitungsschaltung (101) umfasst.

3. Elektronische Vorrichtung (100) nach Anspruch 1 oder 2, wobei das Steuersignal einen ersten Steuersignalpegel und einen zweiten Steuersignalpegel beinhaltet, wobei der erste Steuersignalpegel und der zweite Steuersignalpegel jeweils einem ersten Datendurchsatz und einem zweiten Datendurchsatz entsprechen, und
jede lokale Steuerung (102) ferner dazu konfiguriert ist, den Datendurchsatz der jeweiligen Datenverarbeitungsschaltung (101) an den ersten Datendurchsatz anzupassen, wenn sich das Steuersignal auf dem ersten Steuersignalpegel befindet, und ferner dazu konfiguriert ist, den Datendurchsatz der jeweiligen Datenverarbeitungsschaltung (101) an den zweiten Datendurchsatz anzupassen, wenn sich das Steuersignal auf dem zweiten Steuersignalpegel befindet.

4. Elektronische Vorrichtung (100) nach einem der Ansprüche 1 bis 3, wobei die elektronische Vorrichtung (100) ferner einen Bus-Arbitrator (107) umfasst, der dazu konfiguriert ist, das Steuersignal basierend auf mindestens einem der Folgenden zu erzeugen:
Zugriffslast des DRAM (103) und Informationen über die jeweiligen Datenverarbeitungsschaltungen (101), die eine höhere Priorität als die anderen Datenverarbeitungsschaltungen (101) haben.

5. Elektronische Vorrichtung (100) nach Anspruch 4, wobei der Bus-Arbitrator (107) dazu konfiguriert ist, die Übertragung des Steuersignals an die mindestens eine Datenverarbeitungsschaltung (101) auszulösen, falls die Zugriffslast des DRAM (103) kleiner als ein Zugriffslast-Schwellenwert ist.

6. Elektronische Vorrichtung (100) nach einem der vorhergehenden Ansprüche, wobei die elektronische Vorrichtung ferner eine DRAM-Steuerung (105) umfasst, wobei die DRAM-Steuerung (105) dazu konfiguriert ist, mindestens eines der Folgenden bereitzustellen:
Informationen über die Zugriffslast des DRAM (103), und
Informationen darüber, wie stark der Datendurchsatz anzupassen ist.

7. Elektronische Vorrichtung (100) nach einem der Ansprüche 1 bis 6, wobei die lokale Steuerung (102) der jeweiligen Datenverarbeitungsschaltung (101) dazu konfiguriert ist, den zugewiesenen Datendurchsatz für die jeweilige Datenverarbeitungsschaltung (101) zu bestimmen.

8. Elektronische Vorrichtung (100) nach einem der Ansprüche 1 bis 7, wobei die lokale Steuerung (102) ferner dazu konfiguriert ist, für den Fall, dass der Datendurchsatz größer als der zugewiesene Datendurchsatz ist, den Datendurchsatz an einen angepassten Datendurchsatz anzupassen, der kleiner als der Datendurchsatz ist.

9. Elektronische Vorrichtung (100) nach einem der Ansprüche 1 bis 7, wobei die lokale Steuerung (102) dazu konfiguriert ist, für den Fall, dass der Datendurchsatz größer als der zugewiesene Datendurchsatz ist, den Datendurchsatz an einen angepassten Datendurchsatz anzupassen, der kleiner ist als der Datendurchsatz auf der Grundlage der Zugriffslast des DRAM (103) und eines oder mehrerer Zustände der anderen Datenverarbeitungsschaltungen (101), wobei der eine oder die mehreren Zustände der anderen Datenverarbeitungsschaltungen (101) einen Datendurchsatzzustand, einen Lastzustand und/oder einen Verarbeitungszustand umfassen.

10. Elektronische Vorrichtung (100) nach einem der vorhergehenden Ansprüche, wobei die mindestens eine Datenverarbeitungsschaltung (101) zwei Datenverarbeitungsschaltungen (101) umfasst, wobei jede der zwei Datenverarbeitungsschaltungen (101) dazu konfiguriert ist, sich auf der Grundlage der Zugriffslast des DRAM (103) an einen angepassten Datendurchsatz anzupassen, der kleiner ist als der Datendurchsatz der jeweiligen Datenverarbeitungsschaltung (101) .

11. Elektronische Vorrichtung (100) nach einem der vorhergehenden Ansprüche, wobei die mindestens eine Datenverarbeitungsschaltung (101) eine Bildsignalverarbeitungsschaltung, ISP-Schaltung, (101) umfasst.

12. Elektronische Vorrichtung (100) nach einem der vorhergehenden Ansprüche, wobei die elektronische Vorrichtung (100) ein System auf einem Chip, SoC, ist.

13. Verfahren (900) zum Zugreifen auf einen DRAM (103) durch mindestens eine Datenverarbeitungsschaltung (101), wobei der DRAM (103) mit einer Zugriffslast verknüpft ist, wobei jeder der mindestens einen Datenverarbeitungsschaltungen (101) ein Datendurchsatz zum Zugreifen auf den DRAM (103) zugewiesen wird, wobei das Verfahren (900) Folgendes umfasst:
Anpassen (901) eines Datendurchsatzes der mindestens einen Datenverarbeitungsschaltung (101) basierend auf der Zugriffslast des DRAM (103) und dem jeweiligen Datendurchsatz, wobei das Verfahren ferner Verbinden, über einen Kommunikationsbus (109), jeder Datenverarbeitungsschaltung (101) mit dem DRAM (103) umfasst, wobei jede der mindestens einen Datenverarbeitungsschaltungen (101) eine lokale Steuerung (102) umfasst, die den Datendurchsatz einer jeweiligen Datenverarbeitungsschaltung (101) als Reaktion auf das Empfangen eines Steuersignals anpasst.

## Revendications

1. Dispositif électronique (100), comprenant :
une mémoire vive dynamique partagée, DRAM (103) configurée pour être accessible par au moins un circuit de traitement de données (101), dans lequel la DRAM (103) est associée à une charge d'accès ; et
dans lequel chacun de l'au moins un circuit de traitement de données (101) est configuré pour se voir attribuer un débit de données pour accéder à la DRAM (103) et configuré pour être commandé pour ajuster un débit de données sur la base de la charge d'accès de la DRAM (103) et le débit de données respectif, dans lequel le dispositif électronique (100) comprend également un bus de communication (109) configuré pour connecter chaque circuit de traitement de données (101) à la DRAM (103),
dans lequel chacun de l'au moins un circuit de traitement de données (101) comprend un dispositif de commande local (102) configuré pour ajuster le débit de données d'un circuit de traitement de données (101) respectif en réponse à la réception d'un signal de commande.

2. Dispositif électronique (100) selon la revendication 1, dans lequel le signal de commande comprend un débit de données déterminé pour le circuit de traitement de données (101) respectif, ou une quantité de déduction ou d'addition pour le débit de données actuel du circuit de traitement de données (101) respectif.

3. Dispositif électronique (100) selon la revendication 1 ou 2, dans lequel le signal de commande comporte un premier niveau de signal de commande et un second niveau de signal de commande, dans lequel le premier niveau de signal de commande et le second niveau de signal de commande correspondent à un premier débit de données et respectivement un second débit de données, et chaque dispositif de commande local (102) est également configuré pour ajuster le débit de données du circuit de traitement de données (101) respectif au premier débit de données lorsque le signal de commande est au premier niveau de signal de commande, et est également configuré pour ajuster le débit de données du circuit de traitement de données (101) respectif au second débit de données lorsque le signal de commande est au second niveau de signal de commande.

4. Dispositif électronique (100) selon l'une quelconque des revendications 1 à 3, dans lequel le dispositif électronique (100) comprend également un arbitre de bus (107) configuré pour générer le signal de commande sur la base d'au moins l'une parmi :
la charge d'accès de la DRAM (103), et des informations concernant les circuits de traitement de données (101) respectifs ayant une priorité plus élevée que les autres circuits de traitement de données (101).

5. Dispositif électronique (100) selon la revendication 4, dans lequel l'arbitre de bus (107) est configuré pour déclencher la transmission du signal de commande vers l'au moins un circuit de traitement de données (101), au cas où la charge d'accès de la DRAM (103) est inférieure à une valeur seuil de charge d'accès.

6. Dispositif électronique (100) selon l'une quelconque des revendications précédentes, dans lequel le dispositif électronique comprend également un dispositif de commande DRAM (105), dans lequel le dispositif de commande DRAM (105) est configuré pour fournir au moins les unes parmi :
des informations concernant la charge d'accès de la DRAM (103), et
des informations sur le degré d'ajustement du débit de données.

7. Dispositif électronique (100) selon l'une quelconque des revendications 1 à 6, dans lequel le dispositif de commande local (102) du circuit de traitement de données (101) respectif est configuré pour déterminer le débit de données alloué pour le circuit de traitement de données (101) respectif.

8. Dispositif électronique (100) selon l'une quelconque des revendications 1 à 7, dans lequel le dispositif de commande local (102) est également configuré, dans le cas où le débit de données est supérieur au débit de données alloué, pour ajuster un débit de données à un débit de données ajusté inférieur au débit de données.

9. Dispositif électronique (100) selon l'une quelconque des revendications 1 à 7, dans lequel le dispositif de commande local (102) est configuré, dans le cas où le débit de données est supérieur au débit de données alloué, pour ajuster le débit de données à un débit de données ajusté inférieur au débit de données sur la base de la charge d'accès de la DRAM (103) et des un ou plusieurs états des autres circuits de traitement de données (101), dans lequel les un ou plusieurs états des autres circuits de traitement de données (101) comprennent un état de débit de données, un état de chargement et/ou un état de traitement.

10. Dispositif électronique (100) selon l'une quelconque des revendications précédentes, dans lequel l'au moins un circuit de traitement de données (101) comprend deux circuits de traitement de données (101), chacun des deux circuits de traitement de données (101) est configuré pour s'ajuster sur la base de la charge d'accès de la DRAM (103) à un débit de données ajusté inférieur au débit de données du circuit de traitement de données (101) respectif.

11. Dispositif électronique (100) selon l'une quelconque des revendications précédentes, dans lequel l'au moins un circuit de traitement de données (101) comprend un circuit de traitement de signal d'image, ISP, (101).

12. Dispositif électronique (100) selon l'une quelconque des revendications précédentes, dans lequel le dispositif électronique (100) est un système sur puce, SoC.

13. Procédé (900) d'accès à une DRAM (103) par au moins un circuit de traitement de données (101), la DRAM (103) étant associée à une charge d'accès, dans lequel chacun de l'au moins un circuit de traitement de données (101) se voit attribuer un débit de données pour accéder à la DRAM (103), dans lequel le procédé (900) comprend :
l'ajustement (901) d'un débit de données de l'au moins un circuit de traitement de données (101) sur la base de la charge d'accès de la DRAM (103) et du débit de données respectif,
dans lequel le procédé comprend également la connexion, par un bus de communication (109), de chaque circuit de traitement de données (101) à la DRAM (103), dans lequel chacun de l'au moins un circuit de traitement de données (101) comprend un dispositif de commande local (102) qui ajuste le débit de données d'un circuit de traitement de données (101) respectif en réponse à la réception d'un signal de commande.
